# FASCICULE DE BREVET EUROPEEN

(11) **EP 3 117 087 B1**
(45) Date de publication et mention de la délivrance du brevet: **01.11.2023**
(21) Numéro de dépôt: 15706891.7
(22) Date de dépôt: 04.02.2015
(51) Int. Cl.: F02D 41/02, F02D 41/04, B60W 10/02, B60W 30/18, F02N 11/08, B60K 6/20

(54) **PROCÉDÉ DE CONTRÔLE DE L'ARRÊT D'UN MOTEUR THERMIQUE**
VERFAHREN ZUR STEUERUNG DES ABSCHALTENS EINER BRENNKRAFTMASCHINE
METHOD FOR CONTROLLING THE SHUT-DOWN OF AN INTERNAL COMBUSTION ENGINE

(30) Priorité: 14.03.2014 FR 1452141
(43) Date de publication de la demande: 18.01.2017
(73) Titulaire: Renault s.a.s, 92100 Boulogne Billancourt (FR)
(72) Inventeur: PETILLON, Yohann, F-78180 Montigny Le Bretonneux (FR); NODIN, Bertrand, F-91430 Igny (FR)
(74) Mandataire: Renault Group
(86) Numéro de dépôt international: PCT/FR2015/050270
(87) Numéro de publication internationale: WO 2015/136167

(56) Documents cités:
- EP-A1- 2 301 817
- FR-A1- 2 873 753

## Description

La présente invention concerne le contrôle des groupes motopropulseurs *(GMP)*, notamment de véhicule, composés d'au moins un moteur thermique associé à une transmission automatique ou automatisée, et éventuellement à une machine électrique de traction.

Plus précisément, elle a pour objet un procédé de contrôle d'un groupe motopropulseur de véhicule comprenant un moteur thermique relié à la transmission du véhicule par un embrayage commandé entre une position d'ouverture et une position de fermeture de la transmission par un calculateur de transmission, qui échange des informations avec le calculateur du moteur thermique, de manière à fermer le volet d'air du moteur et déconnecter le moteur de la transmission, lorsque le véhicule est en roulage.

Cette invention trouve une application privilégiée, mais non limitative, sur tout véhicule équipé de la fonction de coupure et redémarrage automatique du moteur à l'arrêt, (« *stop and start* » et de la fonctionnalité de déconnexion en roulage de la transmission, (« *coasting stop* » ou « *sailing* »). Ce véhicule peut avantageusement être équipé d'une transmission automatique ou automatisée, intégrée dans un GMP hybride.

Le système du « *stop and start* » *(S&S),* présent sur de nombreux véhicules, augmente considérablement le nombre de coupures et de redémarrages du moteur thermique sur un parcours. Dans certaines applications dites « micro hybrides » l'ajout de machines électriques de puissance ciblées, permet d'introduire en plus, de nouvelles fonctionnalités destinées à réduire encore davantage la consommation de carburant, en coupant le moteur dès qu'il n'y a plus de nécessité de traction, y compris véhicule roulant. Ces nouvelles stratégies de commande engendrent également une augmentation significative du nombre d'arrêts et de redémarrages du moteur, pratiquement triplé dans ce cas. Sur de tels véhicules, il est primordial que les phases d'arrêt et de redémarrage du moteur thermique soient pratiquement imperceptibles par les utilisateurs du véhicule, conducteur et passagers.

Le document EP2301817 A1 décrit un procédé de « arrêt et redémarrage » dans lequel l'ouverture de l'embrayage et la fermeture du volet d'air du moteur sont commandés au même instant pour empêcher la production d'énergie électrique par le générateur.

La présente invention vise à améliorer la qualité de l'arrêt moteur pour les véhicules dotés de la fonction *« stop and start* », et bénéficiant des fonctions de déconnexion de la transmission en roulage « *coasting stop* » ou « *sailing* ».

Dans ce but, elle propose que l'arrêt du moteur thermique en roulage soit anticipé par rapport à rapport à l'ouverture de l'embrayage, de manière à ce que cette ouverture intervienne simultanément à la fermeture du volet d'air du moteur.

De préférence, le calculateur de la transmission envoie un message au calculateur du moteur à une première date pour synchroniser l'ouverture de l'embrayage et la fermeture du volet moteur à une deuxième date postérieure à la première.

L'invention sera mieux comprise à la lecture de la description suivante d'un mode de réalisation non limitatif de celle-ci, en se reportant aux dessins annexés, sur lesquels :
- la figure 1 illustre une séquence de préparation à l'arrêt du moteur lorsque le véhicule est arrêté, et
- la figure 2 une séquence de préparation à l'arrêt du moteur lorsque le véhicule roule.

Pour réaliser un arrêt moteur de qualité, avec une diminution importante des vibrations ressenties par le conducteur, il est nécessaire que la fermeture du volet d'air et la coupure de l'injection soient simultanées. Or, la dynamique des deux actionneurs n'est pas la même : 300 ms (millisecondes) entre la commande de fermeture et la fermeture effective du volet d'air, et coupure pratiquement instantanée de l'injection. Il est donc nécessaire d'anticiper la commande de fermeture du volet par rapport à la commande de coupure d'injection.

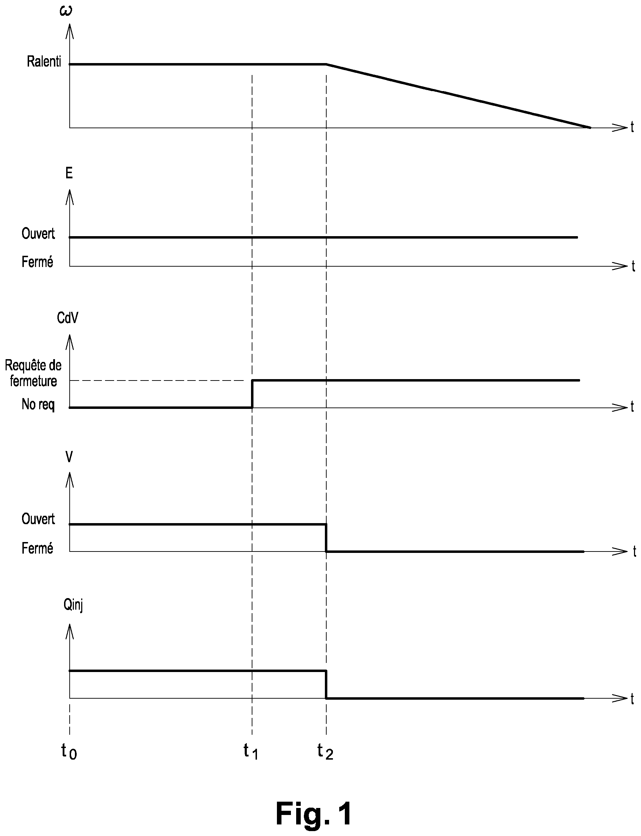

Pour préparer l'arrêt du moteur lorsque le véhicule est arrêté, avec sa chaîne cinématique ouverte (embrayage ouvert) et une injection de carburant réglée sur le maintien du régime de ralenti, la séquence des opérations peut être conforme à celle de la figure 1, sur laquelle on a représenté, (en partant du haut) la variation en fonction du temps, du régime moteur ω, l'état de l'embrayage ***E*,** la commande du volet d'air du moteur ***C_{d}V,*** l'état du volet d'air ***V*** et la quantité de carburant injecté ***Qᵢₙⱼ.***

L'embrayage ne change pas d'état au cours de l'opération, puisqu'il reste ouvert, et qu'on commande la fermeture du volet d'air par anticipation à ***t₁*,** en maintenant l'injection du carburant ***Q**ᵢₙⱼ* à son niveau de ralenti jusqu'à ***t₂*** (postérieur à ***t₁*)**, date de fermeture du volet d'air du moteur. On fait ainsi coïncider ces deux évènements, de manière à rendre la coupure du moteur presque imperceptible. L'injection du carburant est maintenue avec retard par rapport à la requête de fermeture du volet d'air, pour la faire coïncider avec la fermeture effective de celle-ci.

Comme indiqué plus haut, avec les fonctionnalités de « *coasting stop* » ou « *sailing* », l'arrêt du moteur et l'ouverture de la transmission peuvent être déclenchés automatiquement en roulage, lorsqu'il n'y a plus de nécessité de traction. Le moteur peut être ainsi arrêté lorsque le véhicule roule, chaîne cinématique fermée, et injection coupée. La rotation du moteur, est encore assurée par l'inertie du véhicule, car l'embrayage ***E*** est fermé. L'embrayage ***E*** doit être ouvert, pour libérer le moteur de la chaîne cinématique. Il est nécessaire de faire coïncider la fermeture du volet d'air ***V*** avec l'ouverture de l'embrayage ***E*** (en maintenant l'injection coupée). Or, la dynamique d'ouverture d'embrayage (~100 ms) est également plus rapide que la fermeture du volet d'air ***V*.** Il est nécessaire d'anticiper cette fermeture. On introduit un nouvel échange d'informations entre les deux calculateurs, relatif à l'ouverture imminente de la transmission. Outre l'information sur l'état de l'embrayage ***E*** (ouvert / fermé), les signaux transitant entre les deux calculateurs incluent une information sur l'ouverture éminente de la transmission.

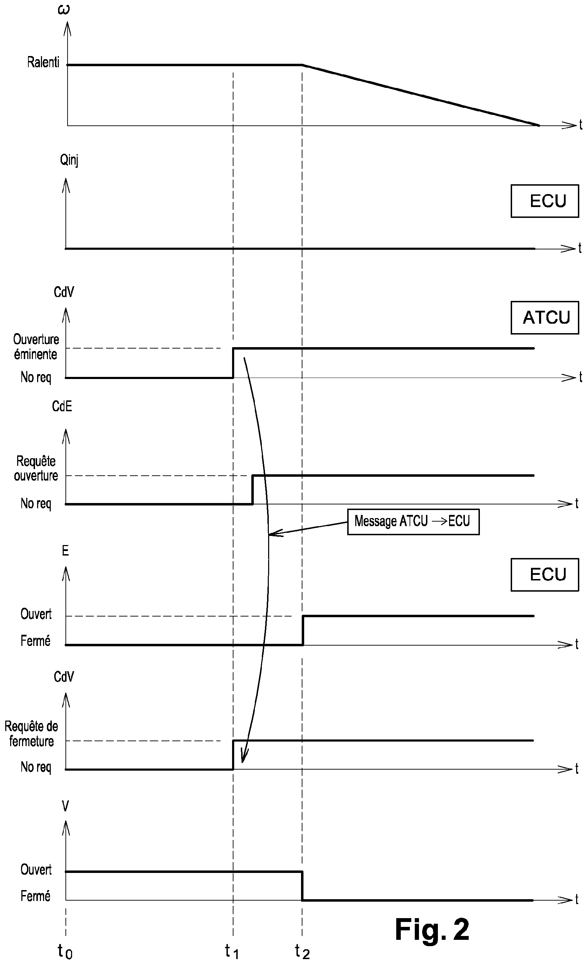

La séquence de préparation à l'arrêt pour contrôler un *GMP* comprenant un moteur thermique relié à la transmission du véhicule par un embrayage commandé entre une position d'ouverture et une position de fermeture de la transmission par un calculateur de transmission *ATCU* échangeant des informations avec calculateur du moteur thermique *ECU* est illustré par la figure 2.

Cette séquence est construite de manière à pouvoir couper l'injection ***Q**ᵢₙⱼ*, fermer le volet d'air ***V*,** et déconnecter le moteur de la transmission lorsque le véhicule est en roulage. A ***t₀,*** le véhicule roule, la chaîne cinématique est fermée, et l'injection est déjà coupée. *ACTU* envoie un message à *ECU* à ***t₁,*** pour synchroniser l'ouverture de l'embrayage et la fermeture du volet ***V** à* ***t₂*.** Un signal de commande anticipée d'ouverture d'embrayage est émis par *ACTU* à destination d'*ECU* à ***t₁*,** pour l'avertir, de l'ouverture imminente de l'embrayage et préparer l'arrêt du moteur en déclenchant instantanément la fermeture du volet d'air. *ACTU* commande ensuite l'ouverture de l'embrayage. Enfin, à ***t₂*,** le signal d'état d'embrayage ***E*** marque son ouverture, simultanément à la fermeture du volet d'air. En résumé, ***t₁*** marque le déclenchement de la fermeture du volet d'air et l'avertissement de *ECU* par *ACTU,* pour synchroniser l'ouverture de l'embrayage avec la fermeture du volet d'air. ***t₂*** marque la fermeture du volet d'air, et 'ouverture de l'embrayage. La requête d'ouverture d'embrayage est envoyée à l'embrayage par *ACTU* entre ***t₁*** et ***t₂*.**

L'arrêt du moteur thermique est anticipé par rapport à l'ouverture de l'embrayage, de manière à ce que celle-ci intervienne simultanément à la fermeture du volet d'air du moteur. A **t₂,** la transmission est déconnectée du moteur. Celui-ci s'arrête progressivement. Si au début de la séquence, le régime moteur est celui du ralenti, il tombe progressivement à zéro à partir **t₂** marquant la déconnexion de la transmission et du moteur.

En conclusion, l'invention propose d'anticiper l'arrêt moteur par rapport à l'ouverture embrayage pour réaliser avec une bonne qualité vibratoire et acoustique la fonctionnalité de déconnexion en roulage (« *coasting stop* » ou sailing ») de la transmission lorsque l'injection est déjà coupée. Si en revanche, l'arrêt du moteur est déclenché lorsque le véhicule est déjà à l'arrêt avec sa transmission ouverte (fonction « *stop and start* »), l'injection du carburant est maintenue avec retard par rapport à la requête de fermeture du volet d'air, pour faire coïncider sa coupure avec la fermeture du volet.

## Revendications

1. Procédé de contrôle de l'arrêt d'un moteur thermique de groupe motopropulseur de véhicule en roulage ou à l'arrêt, comprenant un moteur thermique relié à la transmission du véhicule par un embrayage commandé entre une position d'ouverture et une position de fermeture de la transmission par un calculateur de transmission (ATCU) échangeant des informations avec un calculateur du moteur thermique (ECU), **caractérisé en ce que** pour anticiper l'arrêt du moteur par rapport à l'ouverture de l'embrayage lorsque le véhicule roule embrayage fermé et injection de carburant coupée, le calculateur de la transmission (ACTU) envoie un message au calculateur du moteur (ECU) à une première date (t1), pour synchroniser l'ouverture de l'embrayage et la fermeture du volet d'air (V) du moteur à une deuxième date (t2) postérieure à (t1).

2. Procédé de contrôle selon la revendication 2, **caractérisé en ce que** la requête d'ouverture est envoyée à l'embrayage (E) entre (t1) et (t2).

3. Procédé de contrôle selon la revendication 1, 2 ou 3, **caractérisé en ce que** l'arrêt du moteur et l'ouverture de la transmission sont déclenchés automatiquement en roulage, lorsqu'il n'y a plus de nécessité de traction.

4. Procédé de contrôle selon l'une des revendications précédentes, **caractérisé en ce que** pour préparer l'arrêt du moteur lorsque le véhicule est arrêté avec son embrayaage ouvert et une injection de carburant (Qinj) réglée sur le maintien du régime de ralenti, l'injection du carburant est maintenue avec retard par rapport à la requête de fermeture du volet d'air (V) pour faire coïncider sa coupure avec la fermeture du volet d'air.

## Patentansprüche

1. Verfahren zum Steuern der Abschaltung eines Verbrennungsmotors eines Antriebsstrangs eines fahrenden oder stehenden Fahrzeugs, umfassend einen Verbrennungsmotor, der mit dem Getriebe des Fahrzeug durch eine Kupplung verbunden ist, die durch einen Getrieberechner (ATCU), der Informationen mit einem Verbrennungsmotorrechner (ECU) austauscht, zwischen einer Öffnungsposition und einer Schließposition des Getriebes gesteuert wird, **dadurch gekennzeichnet, dass**, um das Anhalten des Motors in Bezug auf das Öffnen der Kupplung zu antizipieren, wenn das Fahrzeug mit geschlossener Kupplung und abgeschalteter Kraftstoffeinspritzung fährt, der Getrieberechner (ACTU) zu einem ersten Zeitpunkt (t1) eine Nachricht an den Motorrechner (ECU) sendet, um das Öffnen der Kupplung und das Schließen der Luftklappe (V) des Motors zu einem zweiten Zeitpunkt(t2) nach (t1) zu synchronisieren.

2. Steuerverfahren nach Anspruch 2, **dadurch gekennzeichnet, dass** die Öffnungsanforderung zwischen (t1) und (t2) an die Kupplung (E) gesendet wird.

3. Steuerverfahren nach Anspruch 1, 2 oder 3, **dadurch gekennzeichnet, dass** das Anhalten des Motors und das Öffnen des Getriebes während des Fahrens automatisch ausgelöst werden, wenn kein Traktionsbedarf mehr besteht.

4. Steuerverfahren nach einem der vorangehenden Ansprüche, **dadurch gekennzeichnet, dass** zur Vorbereitung der Abschaltung des Motors, wenn das Fahrzeug mit offener Kupplung und einer auf die Aufrechterhaltung der Leerlaufdrehzahl eingestellten Kraftstoffeinspritzung (Qinj) angehalten wird, die Kraftstoffeinspritzung mit Verzögerung gegenüber der Anforderung zum Schließen der Luftklappe (V) aufrechterhalten wird, damit ihre Abschaltung mit dem Schließen der Luftklappe zusammenfällt.

## Claims

1. Method for controlling the shutdown of a heat engine of a powertrain of a vehicle that is in motion or stationary, comprising a heat engine connected to the transmission of the vehicle by a clutch controlled between an open position and a closed position of the transmission by a transmission computer (ATCU) exchanging information with a computer of the heat engine (ECU), **characterized in that**, in order to shut down the engine before the opening of the clutch when the vehicle is in motion, the clutch being closed and the injection of fuel interrupted, the computer of the transmission (ACTU) sends a message to the computer of the engine (ECU) at a first moment in time (t1), so as to synchronize the opening of the clutch and the closure of the air flap (V) of the engine at a second moment in time (t2) subsequent to (t1).

2. Control method according to Claim 2, **characterized in that** the opening request is sent to the clutch (E) between (t1) and (t2) .

3. Control method according to Claim 1, 2 or 3, **characterized in that** the shutdown of the engine and the opening of the transmission are triggered automatically as the vehicle is in motion, when there is no longer any need for traction.

4. Control method according to one of the preceding claims, **characterized in that**, to prepare the shutdown of the engine when the vehicle is stopped with its clutch open and an injection of fuel (Qinj) set so as to maintain the idling speed, the injection of the fuel is maintained after the request to close the air flap (V) so as to make the interruption of said injection coincide with the closure of the air flap.
